# EUROPÄISCHE PATENTSCHRIFT

(11) **EP 0 326 090 B1**
(45) Veröffentlichungstag und Bekanntmachung des Hinweises auf die Patenterteilung: **30.03.1994**
(21) Anmeldenummer: 89101231.2
(22) Anmeldetag: 25.01.1989
(51) Int. Cl.: G01S 3/78

(54) **Schaltungsanordnung zum Bewerten der Ausgangssignale einer Fotodiodeneinheit**
Circuit arrangement for weighting the output signals of a photodiode array
Circuit pour pondérer des signaux de sortie d'un ensemble de photodiodes

(30) Priorität: 28.01.1988 DE 3802450
(43) Veröffentlichungstag der Anmeldung: 02.08.1989
(73) Patentinhaber: Alcatel SEL Aktiengesellschaft, D-70435 Stuttgart (DE); ALCATEL N.V., NL-1077 XX Amsterdam (NL)
(72) Erfinder: Brinckmann, Willi, D-7146 Tamm (DE); Nestel, Siegfried, Dr., D-7000 Stuttgart 75 (DE)
(74) Vertreter: Graf, Georg Hugo, Dipl.-Ing.

(56) Entgegenhaltungen:
- EP-A- 0 064 746
- WO-A-87/01532
- FR-A- 2 129 045
- FR-A- 2 372 438
- US-A- 4 574 191

## Beschreibung

Die Erfindung betrifft eine Schaltungsanordnung gemäß dem Oberbegriff des Anspruchs 1.

Aus FR-A-21 29 045 ist eine Vorrichtung zum Bestimmen der Einfallsrichtung einer Lichtstrahlung, insbesondere der Sonnenstrahlung, bekannt, die mehrere Meß-Fotozellen und eine Referenz-Fotozelle enthält. Die Referenz-Fotozelle ist permanent beleuchtet und erzeugt einen Bezugspegel für eine Komparator-Schaltung, in der die Ausgangssignale der Meß-Fotozellen mit diesem Bezugspegel verglichen werden. Dadurch werden Änderungen der Ausgangssignale der Meß-Fotozellen aufgrund von Intensitätsschwankungen der erfaßten Lichtstrahlung kompensiert. Die Komparator-Schaltung liefert über einen großen Intensitätsbereich der erfaßten Lichtstrahlung stabile Logiksignale, die ein typisches, binäres Informationsmuster für den gesuchten Einfallswinkel bilden. Der Druckschrift ist zu entnehmen, daß die Vorrichtung zur Erfassung permanenter Lichtstrahlung, insbesondere der Sonnenstrahlung, geeignet ist, um z.B. die Fluglage eines Satelliten zu bestimmen. Die Erfassung einer informationstragenden Lichtstrahlung, wie z.B. modulierter Laserstrahlung, ist nicht beschrieben.

Eine weitere Vorrichtung zum Erkennen der Einfallsrichtung optischer Strahlung, bei der eine zeilenförmige Fotodiodeneinheit zum Bestimmen des Einfallswinkels einer optischen Strahlung verwendet wird, ist z.B. durch die DE-OS 29 31 818 bekannt. Es wird die Erfassung von Signalen, die der Informationsübertragung dienen, insbesondere im militärischen Bereich zum Empfang und zur Richtungsbestimmung von pulsmodulierter Laserstrahlung, beschrieben. Die aus einer Vielzahl eng benachbarter Fotodioden bestehende Einheit ist in einem lichtdichten Gehäuse angeordnet. In der der Fotodiodeneinheit gegenüberliegenden Gehäusewandung befindet sich eine Schlitzblende oder eine entsprechende Optik, durch die eine einfallende Strahlung gemäß ihrem Einfallswinkel auf einen entsprechenden Bereich der Fotodiodeneinheit fokussiert wird. Durch eine nachfolgende Schaltung werden die von den Fotodioden abgegebenen Signale ausgewertet. Das abgegebene Signal jeweils einer Fotodiode durchläuft zwei verschieden lange Ketten von Zeitverzögerungsgliedern und die nachfolgende Schaltung bestimmt aus der Laufzeitdifferenz den gesuchten Einfallswinkel. Der Informationsgehalt einer erfaßten Lichtstrahlung wird insbesondere bei einer kontinuierlichen Modulation durch die Überlagerung der verschieden lang verzögerten Signalanteile verfälscht. Die Probleme, die bei großem Intensitätsunterschied der Strahlung auftreten, wie z.B. ein Übersprechen auf benachbarte Fotodioden, das durch parsitäre Strahlung hervorgerufen wird, werden nicht angesprochen.

Die Aufgabe der Erfindung besteht darin, eine Anordnung zu schaffen, die über einen weiten Intensitätsbereich der Strahlung ein einwandfreies Erkennen der Einfallsrichtung der Strahlung gewährleistet.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß die von den Fotodioden abgegebenen Signale in Abhängigkeit von der Intensität der Strahlung bewertet werden und, in Weiterbildung der Erfindung, daß beim Überschreiten des Aussteuerbereichs der Fotodioden automatisch auf einen Bereich geringerer Empfindlichkeit umgeschaltet wird.

Anhand eines Ausführungsbeispiels wird die Erfindung in Verbindung mit den Zeichnungen nachfolgend näher erläutert. Es zeigt:
- Fig. 1: eine Vorrichtung zum Erkennen der Einfallsrichtung optischer Strahlung in schematischer Darstellung.
- Fig. 2: eine Schaltungsanordnung gemäß der Erfindung in schematischer Darstellung.
- Fig. 3: eine erweiterte Ausführung der Schaltungsanordnung gemäß Fig. 2 mit automatischer Umschaltung des Empfindlichkeitsbereichs der Fotodiode.

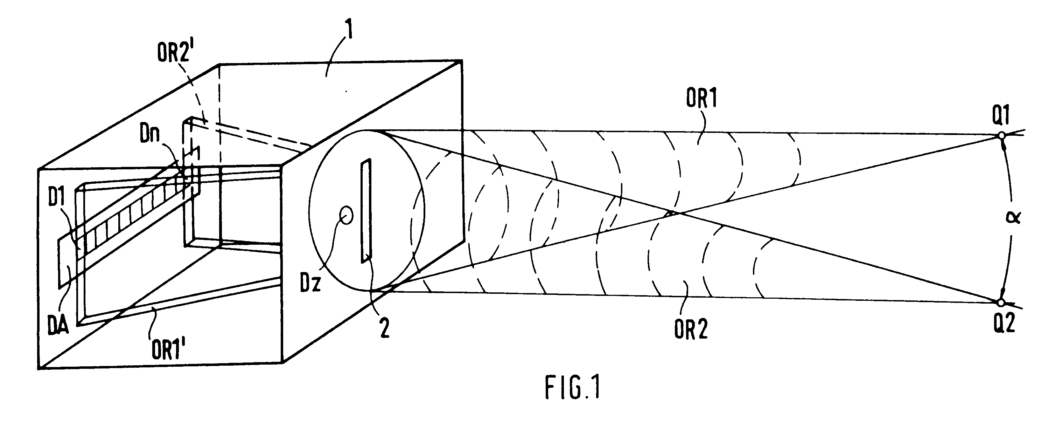

Fig. 1 zeigt in Perspektive eine im wesentlichen durch die DE-OS 26 03 578 bekannte Vorrichtung zum Bestimmen der Einfallsrichtung einer optischen Strahlung in schematischer Darstellung. Die Vorrichtung besteht aus einem lichtdichten Gehäuse 1, deren Innenseite reflexionsarm, z.B. mattschwarz ist. (Zum besseren Erkennen ist die dem Betrachter zugewandte Seitenwand entfernt.) Das Gehäuse 1 hat in der Frontseite eine vertikal angeordnete Schlitzblende 2. Quer zu dieser Schlitzblende 2 ist im Innern des Gehäuses 1 an der der Frontseite gegenüberliegenden Wandung eine Fotodiodeneinheit DA angeordnet. Letztere besteht aus einer Vielzahl eng benachbarter, zeilenförmig angeordneter Fotodioden D1 bis Dn.

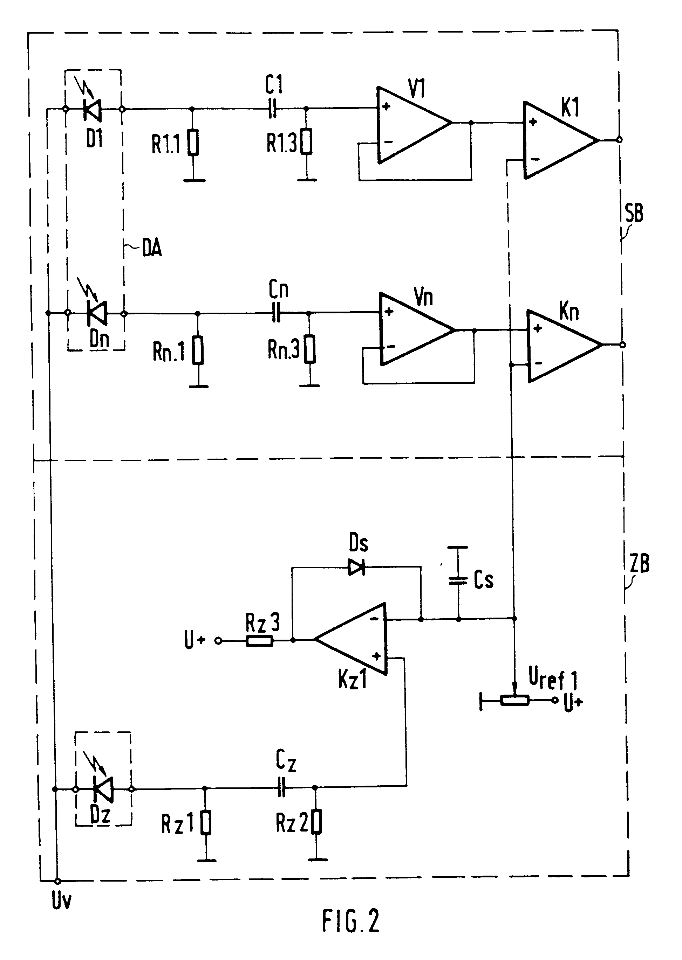

Trifft eine optische Strahlung OR1 oder OR2 auf die Frontseite des Gehäuses 1, wie in Fig. 2 schematisch dargestellt, so fällt ein der Breite der Schlitzblende 2 entsprechender schmaler Strahlungsanteil OR1′ bzw. OR2′ auf vorzugsweise eine der Fotodioden D1 bis Dn.

Den Fotodioden D1 bis Dn sind bestimmte Winkelbereiche zugeordnet, so daß bei ihrem Ansprechen auf den Einfallswinkel der Strahlung OR1 bzw. OR2 rückgeschlossen werden kann und damit auf die Richtung, in der sich die zugehörige Strahlungsquelle Q1 bzw. Q2 befindet. Der maximale Erfassungswinkel α wird im wesentlichen durch die Tiefe des Gehäuses 1 und die Länge der Fotodiodeneinheit DA bestimmt.

Je nach der Entfernung zwischen der Vorrichtung gemäß Fig 1 und der jeweiligen Strahlungsquelle Q1 bzw. Q2, ist die Intensität des auf die Fotodioden D1 bis Dn treffenden Strahlungsanteils OR1′ bzw. OR2′ verschieden groß. Hinzu kommt, daß der Intensitätsverlauf der Strahlung über den Querschnitt typischerweise ein Gauß'sches Verteilungsprofil hat. Je nach dem, ob die Strahlung OR1 bzw. OR2 des Gehäuses 1 konzentrisch zur Schlitzblende 2 trifft, wie in Fig. 1 schematisch dargestellt, oder nur mit dem Randbereich, kann die Intensität des auf die Fotodioden D1 bis Dn treffenden Strahlungsanteils bei gleicher Entfernung der Strahlungsquelle sehr verschieden sein. Weiterhin unterliegt die Strahlung beim Durchtritt durch die Schlitzblende 2 einer Beugung, die mit größer werdender Strahlungsintensität zunimmt. Der auf die Fotodioden D1 bis Dn treffende Strahlungsanteil OR1′ bzw. OR2′ kann dadurch wesentlich breiter als eine Fotodiode sein. Verbunden mit einem zusätzlichen elektrischen und/oder optischen Übersprechen und/oder durch Reflexion innerhalb des Gehäuses hat dieser Effekt Ausgangssignale zur Folge, die ohne besondere Maßnahmen nur in einem beschränkten Intensitätsbereich der Strahlung eine eindeutige Bewertung zulassen.

Es war daher eine Schaltung zu schaffen, die unter Berücksichtigung der Dynamik der auf die Fotodioden D1 bis Dn einwirkenden Strahlung und verfälschender Nebenwirkungen ein eindeutiges Erkennen der Einfallsrichtung einer Strahlung gewährleistet und einen Auswertebereich hat, der mehrfach so groß ist, wie bei herkömmlichen Ausführungen.

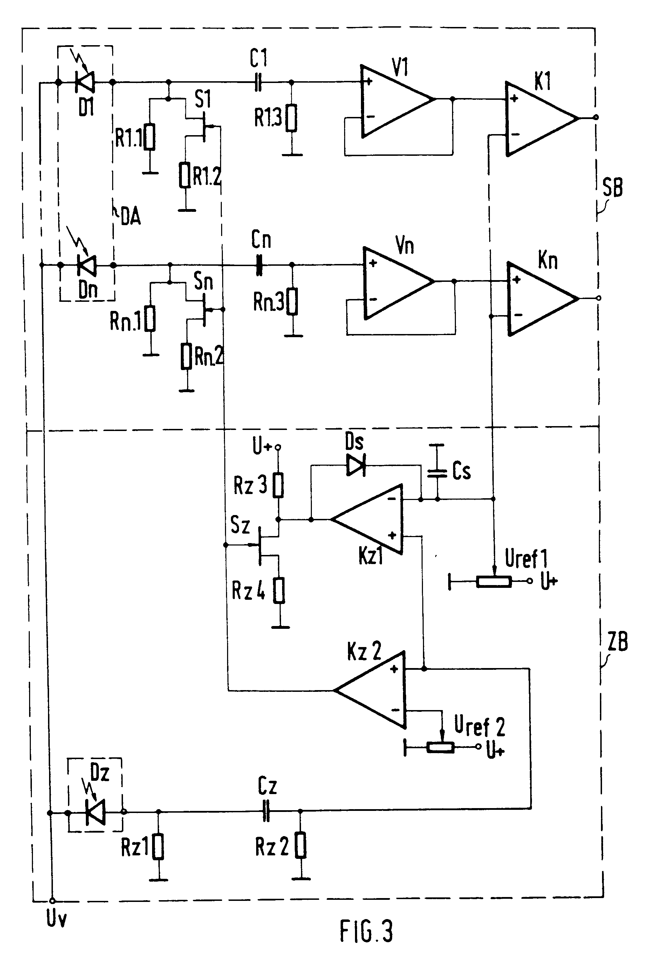

Eine derartige Schaltung zeigt Fig. 2 bzw. Fig. 3. Beide Schaltungen bestehen aus einem Signalbereich SB und einem Zentralbereich ZB. Der Signalbereich SB umfaßt die Fotodiodeneinheit DA mit den Fotodioden D1 bis Dn und den letzteren nachgeschaltete Signalkanäle. Der Zentralbereich ZB umfaßt eine Zentralfotodiode Dz und einen ihr nachgeschalteten Zentralkanal. Die Zentraldiode Dz ist so angeordnet, daß ihr Erfassungsbereich gleich dem Erfassungsbereich der Fotodiodeneinheit DA ist (Erfassungswinkel α in Fig. 1). Die Fotodioden D1 bis Dn und Dz sind eingangsseitig an eine Vorspannung Uv angeschlossen.

Gemäß Fig. 2 umfaßt jeder Signalkanal einen Arbeitswiderstand R1.1, ... Rn.1, einen Hochpaß C1/R1.3, ..., Cn/Rn.3, einen Operationsverstärker V1, ... Vn und einen analogen Komparator K1, ..., Kn. Letztere sind vorzugsweise als Differenzverstärker arbeitende Operationsverstärker, deren Minus-Eingänge mit einer Bezugsspannung Uref1 belegt sind. Die Ausgänge der Komparatoren K1 bis Kn sind mit einer nicht dargestellten prozessorgesteuerten Signalauswerteeinrichtung verbunden. Der Zentralkanal umfaßt einen Arbeitswiderstand Rz1, einen Hochpaß Cz/Rz2, einen analogen Komparator Kz1, der vorzugsweise ein als Differenzverstärker arbeitender Operationsverstärker ist, dessen Ausgang über einen Arbeitswiderstand an Pluspotential U+ liegt. Der Ausgang des Komparators Kz1 ist über eine Diode Ds auf den mit der Bezugsspannung Uref1 belegten Eingang rückgekoppelt. Ein zur Signalspeicherung vorgesehener Kondensator Cs ist an der Zuleitung der Bezugsspannung Uref1 zum Komparator Kz1 gegen Masse angeschlossen. Die Arbeitswiderstände R1.1 bis Rn.1 sind so bemessen, daß die Grundempfindlichkeit der Fotodioden D1 bis Dn hoch ist, so daß sie bereits auf eine optische Strahlung geringer Intensität ansprechen. Die nachgeschalteten Hochpäße C1/R1.3 bis Cn/Rn.3 haben lediglich die Aufgabe, Dauerstrahlung oder Langzeitimpulse auszusieben, so daß nur die interessierenden Strahlungsimpulse kurzer Dauer weiter ausgewertet werden. Die Verstärker V1 bis Vn haben die Aufgabe, den Signalpegel linear auf ein in Relation zur Bezugsspannung Uref1 stehendes Niveau anzuheben. Während der Hochpaß Cz/Rz2 im Zentralkanal denen in den Signalkanälen entspricht, ist der Arbeitswiderstand Rz1 so bemessen, daß die Grundempfindlichkeit der Zentraldiode Dz niedriger liegt als die der Fotodioden D1 bis Dn.

Wie zuvor beschrieben, erfaßt die Zentraldiode Dz einen Strahlungsbereich, der gleich dem gesamten Erfassungsbereich der Fotodioden D1 bis Dn ist. Die Zentraldiode Dz ist daher gemäß Fig. 1 nahe der Schlitzblende 2 angeordnet, so daß ein Strahlungsimpuls, dessen Anteil auf eine der Fotodioden D1 bis Dn fällt, auch voll die Zentralfotodiode Dz trifft. Aufgrund der vorerwähnten Beugung des durch die Schlitzblende 2 (Fig. 1) tretenden Strahlungsanteils, dem elektrischen und/oder optischen Übersprechen und durch die Reflexion innerhalb des Gehäuses spricht je nach Intensität des Strahlungsimpulses nicht nur die direkt beleuchtete Fotozelle D1 bis Dn an, sondern in der Regel noch benachbarte Fotodioden. Die Bewertung dieser parasitären Strahlung, die sich durch die von entsprechenden Signalkanälen abgegebene Spannungsimpulse unterschiedlicher Größe bemerkbar macht, erfolgt durch die analogen Komparatoren K1 bis Kn. Diese sprechen jedoch nur auf Spannungswerte an, die über der angelegten Bezugsspannung Uref1 liegen. Letztere ist so bemessen, daß maximal zwei, im allgemeinen benachbarte Komparatoren K1 bis Kn ansprechen, deren Ausgangssignale durch die nachgeschaltete Auswerteeinrichtung gewichtet werden und aus denen z.B. durch Interpolation der exakte Einfallswinkel des Strahlenimpulses ermittelt wird.

Bei zunehmender Intensität der Strahlungsimpulse nimmt auch die Intensität der parasitären Strahlung zu. Bevor diese die Größenordnung der Bezugsspannung Uref1 erreicht, gibt die Zentraldiode Dz aufgrund der einwirkenden Strahlung eine Spannung ab, die größer als die Bezugsspannung Uref1 ist. Die Folge ist, daß der analoge Komparator Kz1 über die Zeit der erhöhten Spannung anspricht, wobei sich dessen Ausgangsspannung proportional zur Differenz zwischen dem Ausgangspotential der Zentralfotodiode Dz und der Bezugsspannung ändert. Die somit proportional zur Intensität des detektierten Strahlungsimpulses auftretende Ausgangsspannung wird über die Diode Ds auf den Minus-Eingang des Komparators Kz1 rückgekoppelt. Sie wird durch Überlagerung der fest eingestellten Bezugsspannung Uref1 zur neuen Bezugsspannung für die analogen Komparatoren K1 bis Kn. Wegen der angenommenen kurzen Strahlungsimpulse ist der Speicherkondensator Cs vorgesehen, der zur vorübergehenden Erhaltung der erhöhten Bezugsspannung aufgeladen wird. Durch die proportional zur Strahlungsintensität nachgeführte Bezugsspannung wird die Vergleichsschwelle der Komparatoren K1 bis Kn jeweils soweit angehoben, daß Signale, die auf parasitären Strahlungen beruhen, weiterhin unterdrückt werden.

Die zu detektierenden Strahlungsimpulse können eine Dynamik haben, die weit über den Aussteuerbereich der Fotodioden D1 bis Dn hinausgeht, der durch die eingestellte hohe Grundempfindlichkeit und die obere Empfindlichkeitsgrenze gegeben ist. Ohne besondere Maßnahmen läßt sich nur ein Teil des Dynamikbereichs der Strahlungsimpulse mit einer Fotodiodeneinheit DA erfassen, so daß z.B. Strahlungsimpulse geringer Intensität nicht detektiert werden, weil die Komparatoren K1 bis Kn nicht ansprechen. Bei Strahlungsimpulsen hoher Intensität können die auf parasitären Strahlungen beruhende Signalspannungen höher werden, als die Schwellspannungen der zugehörigen Komparatoren K1 bis Kn sind, so daß letztere ansprechen. Eine exakte Bestimmung des Einfallswinkels der zugehörigen Strahlungsimpulse ist dann nicht mehr gewährleistet.

Fig. 3 zeigt eine erweiterte Ausführung der Schaltungsanordnung gemäß Fig. 2, bei der der Aussteuerbereich der Fotodioden D1 bis Dn durch ein Umschalten auf eine niedrigere Grundempfindlichkeit derart innerhalb des Dynamikbereichs der zu detektierenden Strahlung verschoben wird, daß auch Strahlungsimpulse höherer Intensität sicher ausgewertet werden können. Zu diesem Zweck liegen den Arbeitswiderständen R1.1 bis Rn.1 der Fotodioden D1 bis Dn je ein über einen elektronischen Schalter S1 bis Sn zuschaltbarer Widerstand R1.2 bis Rn.2 parallel. Im Zentralbereich ZB ist ein zweiter Komparator Kz2 vorgesehen, der wie der erste Komparator Kz1 mit seinem Puls-Eingang auf den Ausgang der Zentralfotodiode Dz geschaltet ist. Am Minus-Eingang des Komparators Kz2 liegt eine Bezugsspannung Uref2 an, die den Komparator Kz2 bei einer Ansteuerung durch die Zentralfotodiode Dz erst ansprechen läßt, wenn und so lange die Intensität des detektierten Strahlungsimpulses die Empfindlichkeitsobergrenze der Fotodioden D1 bis Dn erreicht bzw. überschreitet. Weiterhin ist am Ausgang des ersten Komparators Kz1 ein elektronischer Schalter Sz in Reihe mit einem an Masse liegenden Widerstand Rz4 angeschlossen. Im leitenden Zustand des Schalters Sz bilden die beiden Widerstände Rz3 und Rz4 einen Spannungsteiler, über den der ausgangsseitige Arbeitspunkt des ersten Komparators Kz1 verändert wird.

Mit dem Ansprechen des zweiten Komparators Kz2 werden die Schalter S1 bis Sn und Sz leitend. In diesem Schaltzustand bestehen die Arbeitswiderstände der Fotodioden D1 bis Dn aus der Parallelschaltung der Widerstände R1.1 und R1.2 bis Rn.1 und Rn.2. Der resultierende Widerstand ist bei allen gleich und so bemessen, daß der Ansteuerbereich der Fotodioden D1 bis Dn in vorbeschriebener Weise innerhalb des Dynamikbereichs der zu detektierenden Strahlung verschoben ist. Parallel dazu wird über den wirksam geschalteten Spannungsteiler Rz3/Rz4 die Ausgangsspannung des ersten Komparators Kz1, die gleichzeitig die Bezugsspannung der analogen Komparatoren K1 bis Kn ist, derart reduziert, daß die Vergleichsschwelle der Komparatoren K1 bis Kn in Relation zur Verringerung der Ansprechempfindlichkeit der Fotodioden D1 bis Dn niedriger liegt.

## Patentansprüche

1. Schaltungsanordnung zum Bewerten der Ausgangssignale einer Vorrichtung zum Bestimmen der Einfallsrichtung optischer Strahlung mit einer Fotodiodeneinheit (DA), die aus einer Vielzahl eng benachbarter, zeilenförmig angeordneter Fotodioden (D1 bis Dn) besteht, die in Abhängigkeit vom Einfallswinkel durch die Strahlung erregt werden, mit einer Zentralfotodiode (Dz), deren Erfassungsbereich gleich dem Erfassungsbereich der Fotodiodeneinheit (DA) ist, und mit analogen Komparatoren (K1 bis Kn), die jeweils einer der Fotodioden (D1 bis Dn) nachgeschaltet sind und die alle an dieselbe Bezugsspannung (Uref1) angeschlossen sind, die von der Zentralfotodiode (Dz) verändert wird,
**dadurch gekennzeichnet,** daß die Bezugsspannung (Uref1) auf die Grundempfindlichkeit der Fotodioden (D1 bis Dn) eingestellt ist, daß den Fotodioden (D1 bis Dn) jeweils ein Signalkanal und der Zentralfotodiode (Dz) ein Zentralkanal nachgeschaltet sind, die jeweils mittels einer Verstärkerschaltung aufgebaut sind, die mittels eines Hochpasses (C1, R1.3 bis Cn, Rn.3; Cz, Rz2) und mittels eines Arbeitswiderstandes (R1.1 bis Rn1; Rz1) das Ausgangssignal der jeweiligen Fotodiode (D1 bis Dn; Dz) derart verstärkt, daß die analogen Komparatoren (K1 bis Kn) bei einer Strahlung, die impulsförmig verläuft und die eine minimale Intensität überschreitet, ansprechen und daß der Zentralkanal mittels eines Speicherkondensators (Cs) und eines ersten Komparators (Kz1) derart aufgebaut ist, daß bei einer impulsförmigen Strahlung und während der Dauer des Ansprechens des ersten Komparators (Kz1) die Bezugsspannung proportional zur Strahlungsintensität geändert wird.

2. Schaltungsanordnung nach Anspruch 1, dadurch gekennzeichnet, daß innerhalb des Zentralkanals das Ausgangssignal der Zentralfotodiode (Dz) auf den positiven Eingang (+) des ersten Komparators (Kz1) geführt wird, und dessen Ausgang über eine Diode (Ds) auf seinen in der Bezugsspannung (Uref1) belegten negativen Eingang (-) rückgekoppelt ist, und daß der Speicherkondensator (Cs) am negativen Eingang (-) gegen Masse eingeschlossen ist, wodurch bei erfaßten Strahlungsimpulsen die Bezugsspannung proportional zur Strahlungsintensität nachgeführt wird.

3. Schaltungsanordnung nach Anspruch 2, dadurch gekennzeichnet, daß weiterhin innerhalb des Zentralkanals der Zentralfotodiode (Dz) ein zweiter Komparator (Kz2) nachgeschaltet ist, dessen Bezugsspannung (Uref2) auf die Empfindlichkeitsobergrenze der Fotodioden (D1 bis Dn) eingestellt ist, daß der Ausgang des zweiten Komparators (Kz2) mit den Ansteuereingängen elektronischer Schalter (S1 bis Sn, Sz) verbunden ist, daß beim Ansprechen des zweiten Komparators (Kz2) die Schalter (S1 bis Sn, Sz) leitend werden, und daß über die Schalter (S1 bis Sn) der Wert der Arbeitswiderstände (R1.1 bis Rn.1) der Fotodioden (D1 bis Dn) und über den Schalter (Sz) die Ausgangsspannung des zu diesem Zeitpunkt bereits angesprochenen ersten Komparators (Kz1) entsprechend der geänderten Empfindlichkeit der Fotodioden (D1 bis Dn) verändert wird.

## Claims

1. A circuit arrangement for evaluating the output signals of a device for determining the direction of incidence of optical radiation, comprising a photodiode unit (DA) consisting of a linear array of closely spaced photodiodes (D1 to Dn) which are activated by the radiation depending on the angle of incidence, a central photodiode (Dz) whose field of view is equal to the field of view of the photodiode unit (DA), and analog comparators (K1 to Kn) which each follow a respective one of the photodiodes (D1 to Dn) and are all connected to the same reference voltage (Uref1), which is varied by the central photodiode (Dz),
**characterized in** that the reference voltage (Uref1) is adjusted to the basic sensitivity of the photodiodes (D1 to Dn), that each of the photodiodes (D1 to Dn) is followed by a signal channel, and the central photodiode (Dz) by a central channel, each of said signal channels and said central channel being constructed with an amplifier circuit which, using a high-pass filter (C1, R1.3 to Cn, Rn.3; Cz, Rz2) and a load resistor (R1.1 to Rn1; Rz1), amplifies the output signal from the respective photodiode (D1 to Dn; Dz) such that the analog comparators (K1 to Kn) respond in the presence of radiation which has a pulse wave-form and which exceeds a minimum intensity, and that the central channel is constructed with a storage capacitor (Cs) and a first comparator (Kz1) such that in the presence of pulse-shaped radiation and during the response of the first comparator (Kz1), the reference voltage is varied proportionally with the radiation intensity.

2. A circuit arrangement as claimed in claim 1, characterized in that in the central channel, the output signal of the central photodiode (Dz) is coupled to the positive input (+) of the first comparator (Kz1), whose output is fed through a diode (Ds) back to its negative input (-), which has the reference voltage (Uref1) connected thereto, and that the storage capacitor (Cs) is connected between the negative input (-) and ground, so that in the presence of radiation pulses, the reference voltage is caused to follow the radiation intensity.

3. A circuit arrangement as claimed in claim 2, characterized in that in the central channel, the central photodiode (Dz) is followed by a second comparator (Kz2) whose reference voltage (Uref) is adjusted to the upper sensitivity limit of the photodiodes (D1 to Dn), that the output of the second comparator (Kz2) is connected to the control inputs of electronic switches (S1 to Sn, Sz), that when the second comparator (Kz2) responds, the switches (S1 to Sn, Sz) are rendered conductive, and that the values of the load resistors (R1.1 to Rn.1) of the photodiodes (D1 to Dn) and the output voltage of the first comparator (Kz1), which has already responded at that time, are changed via the switches (S1 to Sn) and the switch (Sz), respectively, in accordance with the changed sensitivities of the photodiodes (D1 to Dn).

## Revendications

1. Circuit pour traiter les signaux de sortie d'un dispositif prévu pour déterminer la direction d'incidence d'un rayonnement optique, comportant un ensemble de photodiodes (DA) qui est constitué d'une pluralité de photodiodes (D1 à Dn) qui sont étroitement voisines, sont disposées en ligne et sont excitées par le rayonnement en fonction de l'angle d'incidence, comportant aussi une photodiode centrale (Dz) dont la plage de saisie est identique à la plage de saisie de l'ensemble des photodiodes (DA), et comportant aussi des comparateurs analogiques (K1 à Kn) qui sont, chacun, montés en aval de l'une des photodiodes (D1 à Dn) et sont tous reliés à la même tension de référence (Uref1) que modifie la photodiode centrale (Dz), circuit caractérisé par le fait que la tension de référence (Uref1) est réglée sur la sensibilité de base des photodiodes (D1 à Dn), par le fait qu'en aval de chacune des photodiodes (D1 à Dn) est placé un canal de signaux et, en aval de la photodiode centrale (Dz), un canal central, qui sont, chacun, réalisés au moyen d'un circuit amplificateur qui, au moyen d'un filtre passe-haut (C1, R1.3 à Cn, Rn.3; Cz, Rz2) et au moyen d'une résistance de travail (R1.1 à Rn1; Rz1) amplifie le signal de sortie de la photodiode respective (D1 à Dn; Dz) de façon telle que les comparateurs analogiques (K1 à Kn), en présence d'un rayonnement qui arrive sous forme d'impulsion et qui dépasse une intensité minimale, réagissent, et par le fait que le canal central est, au moyen d'un condensateur de mémorisation (Cs) et d'un premier comparateur (Kz1) réalise de façon telle que, en présence d'un rayonnement sous forme d'impulsion et pendant la durée de la réaction du premier comparateur (Kz1), la tension de référence est modifiée proportionnellement à l'intensité du rayonnement.

2. Circuit selon la revendication 1, caractérisé par le fait qu'à l'intérieur du canal central, le signal de sortie de la photodiode centrale (Dz) est envoyé sur l'entrée positive (+) du premier comparateur (Kz1) et que la sortie de ce premier comparateur est, par l'intermédiaire d'une diode (Ds), rétrocouplée sur son entrée négative (-) mise à la tension de référence (Uref1), et par le fait que le condensateur de mémorisation (Cs) est relié à l'entrée négative (-) et mis à la masse, ce par quoi, lorsque des impulsions de rayonnement sont saisies, la tension de référence fait l'objet d'une reprise pour devenir proportionnelle à l'intensité du rayonnement.

3. Circuit selon la revendication 2, caractérisé par le fait qu'en outre, à l'intérieur du canal central de la photodiode centrale (Dz), est placé un second comparateur (Kz2) dont la tension de référence (Uref2) est réglée sur la limite supérieure de sensibilité des photodiodes (D1 à Dn), par le fait que la sortie du second comparateur (Kz2) est reliée avec les entrées d'excitation des interrupteurs électroniques (S1 à Sn, Sz), par le fait qu'en cas de réaction du second comparateur (Kz2), les interrupteurs (S1 à Sn, Sz) deviennent conducteurs, et par le fait que, par l'intermédiaire des interrupteurs (S1 à Sn), la valeur des résistances de travail (R1.1 à Rn.1) des photodiodes (D1 à Dn) est modifiée en correspondance avec la sensibilité, modifiée, des photodiodes (D1 à Dn) et que, par l'intermédiaire de l'interrupteur (Sz), la tension de sortie du premier comparateur (Kz1), ayant déjà réagi à cet instant, est également modifiée en fonction de la sensibilité, modifiée, des photodiodes.
